# EUROPÄISCHE PATENTANMELDUNG

(11) **EP 4 542 191 A1**
(43) Veröffentlichungstag der Anmeldung: **23.04.2025**
(21) Anmeldenummer: 23204369.5
(22) Anmeldetag: 18.10.2023
(51) Int. Cl.: G01M 3/28, F17D 5/02, E03B 7/00, G05D 7/00, G05D 7/06

(54) **VERFAHREN UND VORRICHTUNG ZUR DETEKTION EINER LECKAGE IN EINEM VERSORGUNGSNETZWERK**

(71) Anmelder: Siemens Aktiengesellschaft, 80333 München (DE)
(72) Erfinder: Klehr, Stefan, 76764 Rheinzabern (DE); Labisch, Daniel, 76149 Karlsruhe (DE); von Dosky, Stefan, 76149 Karlsruhe (DE)
(74) Vertreter: Siemens Patent Attorneys

(57) **Zusammenfassung**

Die Erfindung betrifft ein Verfahren zur Detektion einer Leckage und eine dafür geeignete Vorrichtung in einem Versorgungsnetzwerk mit einem Rohrleitungssystem, durch welches ein Fluid geleitet wird, wobei an verschiedenen Orten (x1, x2, ...xN) des Rohrleitungssystems in Abhängigkeit von der Zeit jeweils ein Druck (p(t)) des Fluids und ein Volumenstrom (V(t)) des Fluids messtechnisch erfasst werden. Die Erfindung ist dadurch gekennzeichnet, dass an einem ersten Ort (x1) für eine erste definierte Zeitdauer (T1) der Druck im Rohrleitungssystem mit einem ersten vorgebbaren Referenzsignal (M1) moduliert wird, und bevorzugt an diesem ersten Ort (x1) Verläufe des modulierten Druck- und Volumenstromsignals aufgenommen werden und bei Detektion einer Zeitdifferenz (Δt1) zwischen definierten Signalanteilen des Drucksignals und des Volumenstromsignals, aus dieser Zeitdifferenz (Δt1) eine erste Entfernung einer Leckage zu diesem ersten Ort (x1) ermittelt wird. Das erfindungsgemäße Verfahren und entsprechend ausgestaltete Vorrichtungen sind insbesondere für die Detektion von Bestandsleckagen in Versorgungsnetzen anwendbar.

## Beschreibung

Die Erfindung betrifft Verfahren zur Detektion einer Leckage in einem Versorgungsnetzwerk mit einem Rohrleitungssystem, durch welches ein Fluid geleitet wird, wobei an verschiedenen Orten des Rohrleitungssystems in Abhängigkeit von der Zeit jeweils ein Druck des Fluids und ein Volumenstrom des Fluids messtechnisch erfasst werden. Die Erfindung betrifft ferner für das Verfahren geeignete Vorrichtungen.

Trinkwasserverlust durch marode Rohrleitungssysteme ist weltweit in vielen Ländern ein großes Problem. Enorme Mengen an Trinkwasser gehen bei unerkannten Leckagen verloren. Hier besteht weltweit Handlungsbedarf, denn aufgrund des Klimawandels, der wachsenden Weltbevölkerung und der zunehmenden Industrialisierung wird Wasser immer mehr zu einem knappen und teuren Lebensmittel.

Aus dem Stand der Technik sind eine Vielzahl von Methoden zur Detektion von Leckagen in Wasserverteilnetzen bekannt. Grundsätzlich können Leckerkennungstechniken in zwei Kategorien eingeteilt werden: in externe und interne Methoden. Die externen Methoden erkennen das Leck, indem sie nach Anzeichen dafür außerhalb des Rohrleitungssystems suchen. Ein Beispiel hierfür ist die Sichtprüfung. Eine weitere Methode ist das Abhören des Fließgeräusches an der Rohrleitung an verschiedenen Stellen, woraus der Ort der Leckage bestimmt werden kann. Bei den internen Methoden, beispielsweise der Inneninspektion, wird versucht, über Sensorik, welche Zustandsgrößen innerhalb der Rohrleitungen messen, Lecks zu finden. In dieser Kategorie sind eine Vielzahl mathematischer, rechnerischer und Signalverarbeitungsmethoden enthalten.

Aus Silva et al., J A F R 1996 "Pressure wave behavior and leak detection in pipelines", Comp. And Chemical Eng. Proceedings 6th Eur. Symp. (Rhodes) 20, S. 491-6 ist eine Online-Rechentechnik, bei der die Daten der durch ein Leck verursachten Transienten von einem Computer erfasst werden, der die Drucktransientenkurve anzeigt und die Identifizierung der Leckstelle ermöglicht, bekannt. Diese Methode beruht auf der Tatsache, dass die durch ein Leck erzeugte Druckwelle mit einem plötzlichen Druckabfall einhergeht. Aus der GB2444955A ist ein Leckageerkennungsgerät für unterirdische Wasserverteilungsleitungen bekannt, bei dem von einem Hydranten aus eine Druckwelle auf das unterirdisch gelegene Rohr übertragen wird. Ein Drucksensor erfasst Druckschwankungen in der Flüssigkeit im Rohr, die durch die Druckwelle verursacht werden, die von Diskontinuitäten (z. B. Lecks) im System reflektiert werden. Ein Steuergerät zeichnet die gemessenen Drücke auf, analysiert sie und berechnet den Abstand zwischen dem Drucksensor und einer erkannten Unstetigkeit. Nachteilig bei dem in der GB2444955A beschriebenen Ansatz zur Leckageerkennung ist, dass ein signifikanter Druckstoß benötigt wird, um Reflexionen an der Störstelle der Leckage zu erzeugen, was das Rohrleitungssystem belastet. Es handelt sich ferner um einen temporären Messaufbau mit Personalbedarf, der nicht permanent in bestehende Infrastruktur integrierbar ist. Der Messaufbau funktioniert nur bei großen Leckagen und andere Störstellen (z.B. Abzweigungen oder Querschnittsänderung) führen zu Fehlinterpretationen. Die Detektionsreichweite ist ferner stark begrenzt.

Aus der WO2019/160433A1 ist ein Verfahren zur Verarbeitung transienter Ereignisse in einem Verteilungsnetz mit einer bestimmten Netztopologie auf der Grundlage von Wellenfrontcharakteristiken, die bei hohen Geschwindigkeiten von einer Vielzahl an Sensoren an bestimmten Messorten in dem Verteilungsnetz erfasst werden. Bei dem Verfahren wird zumindest an einer Teilmenge der Messorte durch einen jeweiligen Sensor der N Sensoren eine Ankunftszeit einer Wellenfront, die durch ein bestimmtes transientes Ereignis verursacht wird, erfasst. Danach wird ein Ort des bestimmten transienten Ereignisses in dem Verteilungsnetz in Abhängigkeit von Differenzen der detektierten Ankunftszeiten der Wellenfront, die von den Sensoren an der Teilmenge der Messorte detektiert wurde, bestimmt. Anschließend wird ein Ereignistyp des transienten Ereignisses in dem Verteilungsnetz unter Verwendung des bestimmten Ortes des transienten Ereignisses in dem Verteilungsnetz unter Verwendung der detektierten Ankunftszeiten der Wellenfronten, unter Verwendung der bestimmten Netztopologie des Verteilungsnetzes klassifiziert. Auch bei dem in der WO2019/160433A1 beschriebenen Ansatz ist es nachteilig, dass sehr starke Druckgradienten (bspw. verursacht durch einen Rohrbruch) das Rohrleitungssystem belasten. Ferner sind viele engmaschig verteilte Messstellen notwendig, was insbesondere, was die Stromversorgung der Messstellen angeht, häufig zu Schwierigkeiten führt. Alle Messstellen brauchen eine sehr genaue Uhrzeit bzw. müssen genau synchronisiert sein.

Insbesondere eignen sich beide genannten Verfahren nicht für eine kontinuierliche, ins Rohrleitungssystem eines Wasserversorgungsnetzes integrierte Überwachung von bestehenden Leckagen. Es ist daher Aufgabe der vorliegenden Erfindung, die Nachteile aus dem Stand der Technik zu überwinden und ein verbessertes Verfahren und eine Vorrichtung zur Erkennung von Leckagen, insbesondere Bestandsleckagen, in einem Versorgungsnetz, insbesondere einem Wasserversorgungsnetz, bereitzustellen.

Diese Aufgabe wird durch ein Verfahren mit den Merkmalen des Anspruchs 1 gelöst. Außerdem wird die Aufgabe durch eine Vorrichtung gemäß Anspruch 15 und eine computergestützte Verarbeitungseinheit gemäß Anspruch 16 gelöst. Vorteilhafte Weiterbildungen ergeben sich aus den abhängigen Ansprüchen.

Vorgeschlagen wird eine Methode, wie sie vom Prinzip her aus der Systemanalyse oder der Identifikation dynamischer Systeme bekannt ist, bei der ein dynamisches System geeignet angeregt wird. Erfindungsgemäß wird innerhalb des Versorgungssystems an einer Stelle während einer Messkampagne das System gezielt mit einem Drucksignal angeregt und als Reaktion darauf, der Durchfluss (und zum Vergleich auch der Druck) an der Stelle der Druckbeaufschlagung gemessen. Durch den Zeitversatz zwischen Druckänderung und Durchflussänderung kann die Entfernung zum Ort der Leckage errechnet werden. Durch mehrere Messkampagnen an verschiedenen Orten kann der genaue Ort der Leckage ermittelt werden. Als Messort können dabei insbesondere Einspeisestellen eines Fluids in das Rohrleitungssystem eines Versorgungsnetzwerks zum Einsatz kommen. Beliebige Stellen im Netzwerk des Versorgungsnetzes sind jedoch ebenfalls als Messorte geeignet.

Die Erfindung betrifft somit ein Verfahren zur Detektion einer oder mehrerer Leckagen in einem Versorgungsnetzwerk mit einem Rohrleitungssystem, durch welches ein Fluid geleitet wird, wobei an verschiedenen Orten des Rohrleitungssystems in Abhängigkeit von der Zeit jeweils ein Druck des Fluids und ein Volumenstrom des Fluids messtechnisch erfasst werden. Die Erfindung ist dadurch gekennzeichnet, dass an einem ersten Ort für eine erste definierte Zeitdauer der Druck im Rohrleitungssystem mit einem ersten vorgebbaren Referenzsignal moduliert wird, und bevorzugt an diesem ersten Ort Verläufe des modulierten Druck- und Volumenstromsignals aufgenommen werden und bei Detektion einer Zeitdifferenz zwischen definierten Signalanteilen des Drucksignals und des Volumenstromsignals, aus dieser Zeitdifferenz eine erste Entfernung einer Leckage zu diesem ersten Ort ermittelt wird.

Das erfindungsgemäße Verfahren zur Leckagedetektion ist vorteilhaft vielfältig einsetzbar. Insbesondere können mit dem Verfahren Bestandsleckagen in Versorgungsnetzen detektiert werden. Auch kleine Leckagen, die mit der Zeit immer größer werden, können erfasst werden. Der Normalbetrieb des Versorgungsnetzes wird während der Messkampagnen nicht beeinträchtigt, sodass sich das Verfahren leicht in den bestehenden Betrieb eines Versorgungsnetzes integrieren lässt. Das Verfahren ist derart ausgeführt, dass eine Unterscheidung zwischen Normalbetrieb z.B. in einem Trinkwassernetz und einer Leckage möglich ist. Denn an einer Verbraucherstelle (= einer Stelle, wo Fluid dem Netz entnommen wird), kann grundsätzlich nicht unterschieden werden, ob es sich um eine Leckage oder um einen Normalbetrieb handelt. Demgegenüber steht, dass z.B. bei einem Trinkwassernetz die Verbraucherstellen (also die Hausanschlüsse) über Druckminderer verfügen, welche das Geschehen im Netzwerk von dem Betrieb innerhalb des Hauses entkoppeln. Alle Wasserentnahmestellen hinter dem Druckminderer erfahren die Druckänderung im Netzwerk nicht. Ferner ist anzumerken, dass der Großteil des Wasserverbrauch-Profils im Rohrleitungsnetz statistisch verteilt ist. D.h. zu jedem Zeitpunkt ändern sich Ort, Zeit und Menge der Wasserverbräuche. Die Leckage hingegen ist ortsfest, zu jeder Zeit konstant anstehend und der Leckage-Volumenstrom ist druckabhängig. Durch mehrere Messungen zu verschiedenen Zeiten auch über mehrere Tage (vor allem nachts) kann daher mit der erfindungsgemäßen Methode die gesuchte Leckage vom restlichen Verbrauchsprofil unterschieden werden.

Während durch einen Messvorgang nur die Entfernung zu einer Leckage bestimmbar ist, kann in einer ersten vorteilhaften Ausführung der Erfindung auch der genaue Ort der Leckage im Rohrleitungssystem ermittelt werden. Hierzu wird das erfindungsgemäße Verfahren an weiteren Orten des Rohrleitungssystems zu unterschiedlichen Zeitpunkten wiederholt. Hierfür wird an einem zweiten Ort des Rohrleitungssystems für eine zweite definierte Zeitdauer, welche gleich der ersten Zeitdauer sein kann, der Druck im Rohrleitungssystem mit einem zweiten vorgebbaren Referenzsignal, welches gleich dem ersten Referenzsignal sein kann, moduliert. Bevorzugt an diesem Ort werden nun die Verläufe des modulierten Druck- und Volumenstromsignals aufgenommen und bei Detektion einer Zeitdifferenz zwischen definierten Signalanteilen des Drucksignals und des Volumenstromsignals wird aus dieser Zeitdifferenz eine zweite Entfernung einer Leckage zu diesem zweiten Ort ermittelt. An weiteren Orten wird das Verfahren wiederholt und aus einer Vielzahl der derart ermittelten Entfernungen wird die Position der Leckage in dem Rohrleitungssystem ermittelt. Je höher die Anzahl der Orte, an denen moduliert und gemessen wird, desto genauer ist die Ortung der Leckage. Durch die Verwendung unterschiedlicher Referenzsignale der Druckmodulation können die Einzelmessungen besser unterschieden werden.

In einer besonders vorteilhaften Ausführungsvariante wird die Ermittlung der Entfernungen der Leckage zu den Messorten zu unterschiedlichen Messzeitpunkten durchgeführt. Dies erlaubt eine hohe Flexibilität der Leckageermittlung. So ist es beispielsweise möglich, eine erste Entfernung einer Leckage zu einem ersten Messort an einem Tag durchzuführen und eine zweite Entfernung einer Leckage zu einem zweiten Messort an einem anderen Tag oder beispielsweise während der Nacht durchzuführen. Ferner sind durch verschiedene Messzeitpunkte einzelne Messungen besser trennbar. Insbesondere bei Bestandsleckagen ist diese Ausführung vorteilhaft.

In den meisten Fällen werden die Orte, an welchen die Modulation ins Rohrleitungssystem eingebracht wird, gleich den Messorten des Druck- und Volumenstroms sein. Es kann jedoch beispielsweise aufgrund örtlicher Gegebenheiten des Versorgungsnetzes von Vorteil sein, die Modulation nur an einem Ort oder an wenigen Orten in das Rohrleitungssystem einzubringen und an unterschiedlichen Orten zu messen. In dieser vorteilhaften Ausführung sind zumindest teilweise die Orte, an welchen der Druck im Rohrleitungssystem moduliert wird, unterschiedlich zu den Orten, an welchen der Druck und der Volumenstrom des Fluids gemessen werden. Dies gilt auch für die messtechnischen Erfassung des Drucks und des Volumenstroms des Fluids an unterschiedlichen Orten im selben Rohrleitungsabschnitt. Bautechnische Gegebenheiten innerhalb des Rohrleitungssystems oder eines Abschnitts davon können eine räumliche Trennung der Erfassung des Drucks und des Volumenstromes notwendig machen.

In einer weiteren vorteilhaften Variante des Verfahrens stimmen zumindest teilweise die Zeitdauern, während welchen der Druck im Rohrleitungssystem moduliert wird, und die Zeitdauern, während welchen der Druck und der Volumenstrom des Fluids gemessen werden, überein. Grundsätzlich ist für die Erfassung der Zeitdifferenz zwischen dem Druck- und Volumenstromsignal eine Übereinstimmung der Zeitdauern der Modulation und Messung notwendig. Allerdings kann es in verschiedenen Situationen von Vorteil sein, beispielsweise das Modulationssignal anzustellen, bevor mit der eigentlichen Messung der Zeitverschiebung begonnen wird, damit sich das System einschwingen kann.

Das Modulationssignal kann beliebig wählbar sein. Möglich sind ein kurzzeitiger Druckstoß, ein Drucksprung, oder auch als sinusförmige Druckbeaufschlagung bei verschiedenen Frequenzen. Auch ein Drucksprung nach unten (z.B. 2 bar unterhalb Betriebsdruck) ist denkbar. In einer ganz besonders vorteilhaften Ausführungsvariante wird als Modulationssignal für den Druck ein periodisches Signal mit vorgebbarer Amplitude, Frequenz und Phase ausgewählt und dementsprechend sind die an einem Ort ermittelten Zeitdifferenzen zwischen Druck -und Volumenstromsignal Phasendifferenzen, welche besonders genau messtechnisch erfassbar sind.

Bei einem periodischen Modulationssignal kann die Phase zwischen dem Drucksignal und dem Volumenstromsignal dadurch beeinflusst werden, dass die Frequenz des Drucksignals variiert wird. Durch die Durchstimmbarkeit der Frequenz kann die Genauigkeit der Messung der Zeitdifferenz besonders vorteilhaft erhöht werden.

In einer weiteren vorteilhaften Ausführung wird das gemessene Drucksignal mit dem gemessenen Volumenstromsignal korreliert. Anhand der Korrelation können bestimmte Signalanteile verstärkt werden. Dies lässt sich besonders vorteilhaft ausnutzen, wenn die Zeitdauern, während welchen der Druck und der Volumenstrom des Fluids gemessen werden, möglichst lange gewählt werden. Unter "lange" sind hier Größenordnungen von mehreren Stunden zu verstehen.

Die Amplitude und Frequenz des Modulationssignals können besonders vorteilhaft in Abhängigkeit von Eigenschaften des Rohrleitungssystems ausgewählt werden. Abhängig von der Ausdehnung des Rohrleitungssystems und der Dynamik des Systems können die Frequenzen des Modulationssignals im Bereich von ca. 0,05...0,5 Hz liegen.

Durch Einbindung der messtechnischen Erfassung des Drucks und des Volumenstroms des Fluids und/oder der Druckmodulation in eine Steuerung kann die Effizienz des Verfahrens signifikant erhöht werden.

Eine weitere vorteilhafte Ausgestaltung der Erfindung liegt darin, dass das Versorgungsnetzwerk ein Wasserverteilnetz ist und es sich bei den Messorten um Einspeisestellen für Wasser in das Rohrleitungssystem handelt. Die Erfindung ist anwendbar auf alle Infrastrukturnetze, bei denen Fluide transportiert und/oder verbraucht werden. Beispiele für derartige Infrastrukturnetze sind Gasversorgungs- und Fernwärmenetze, aber auch Wasserstoffverteilnetze.

Im Folgenden wird die Erfindung sowie deren Ausgestaltungen anhand der Figuren, in denen ein Ausführungsbeispiel der Erfindung dargestellt ist, näher beschrieben und erläutert.

Es zeigen:
- Figur 1: eine Skizze eines ersten Ausführungsbeispiels einer erfindungsgemäßen Vorrichtung;
- Figur 2: einen Graphen mit zeitlichen Verläufen des modulierten Druck- und Volumenstromsignals

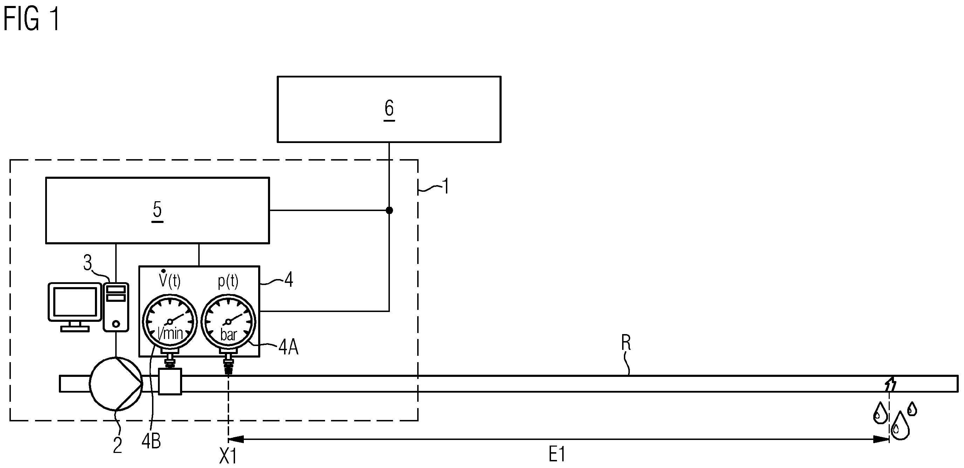

Figur 1 zeigt skizzenhaft ein Ausführungsbeispiel einer erfindungsgemäßen Vorrichtung 1 zur Ermittlung einer Leckage in einem Rohrleitungssystem, durch welches ein Fluid geleitet wird. Die Vorrichtung 1 an einem Ort x1 eines Rohrabschnitts R des Rohrleitungssystems angeordnet. Die Vorrichtung 1 umfasst in diesem Ausführungsbeispiel eine Vorrichtung zur Modulation 2 des Drucks des Fluids, eine computergestützte Steuereinheit 3 zur Steuerung der Vorrichtung zur Modulation 2, ein Erfassungssystem 4, welches einen Drucksensor 4A zur messtechnischen Erfassung eines Drucks p(t) des Fluids und einen Durchflusssensor 4B zur messtechnischen Erfassung des Volumenstroms V(t) des Fluids aufweist, und eine Verarbeitungseinheit 5, welche zumindest mit der Steuereinheit der Vorrichtung zur Modulation 2 und dem Erfassungssystem 4 kommunikativ verbunden ist.

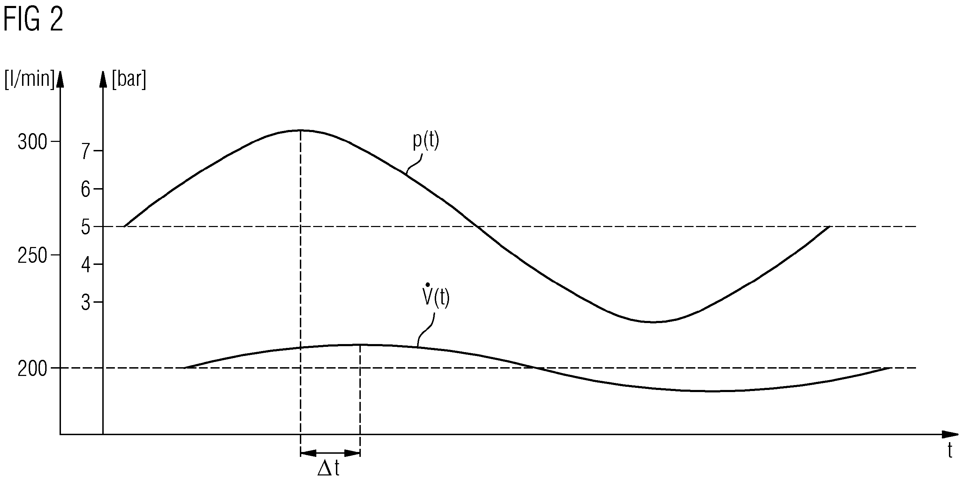

Die Vorrichtung zur Modulation 2 des Drucks kann beispielsweise derart ausgestaltet sein, dass die Drehzahl einer Pumpe variiert wird. Dies kann mittels einer Druckerhöhungspumpe oder einer anderen mechanischen Anordnung wie z.B. einer Pumpe mit einer Bypass-Rückkopplungsleitung mit Drosselventil realisiert werden. Die Pumpe in Fig. 2 ist mit einer computergestützten Steuereinheit 3 verbunden, die beispielsweise die Drehzahl der Pumpe 2 variiert. Das Steuersignal entspricht dem Referenzsignal, mit welchem der Druck des Fluids in der Rohrleitung moduliert wird. Als Drucksensor 4A kann beispielsweise ein Messumformer der SITRANS P Familie der Firma Siemens verwendet werden. Als Durchflusssensor 4B kann beispielsweise ein Messumformer der SITRANS F Familie der Firma Siemens verwendet werden. Der Drucksensor und der Volumenstromsensor sind vorzugsweise in örtlicher Nähe zueinander platziert. Besonders günstig erweist es sich, wenn beide Sensoren innerhalb des gleichen Rohrabschnitts des Rohrleitungssystems angeordnet sind. In einem Wasserversorgungsnetzwerk bieten sich hierfür insbesondere Trinkwasser-Einspeisestellen an, weil an diesen Stellen in der Regel ohnehin Druck- und Durchflusssensoren vorhanden sind. Die Messumformer sind häufig durch Feldbus-Kommunikation mit einer Datenverarbeitungseinheit 5 verbunden, welche wiederum in ein übergeordnetes Datenverarbeitungssystem 6 (bspw. ein Leitsystem) eingebunden sein kann, in welchem die erfassten Prozess- und Diagnosedaten weiterverarbeitet werden.

Erfindungsgemäß wird zur Ermittlung einer Leckage für eine erste definierte Zeitdauer T1 an dem Ort x1 der Druck im Rohrleitungssystem mit einem ersten vorgebbaren Referenzsignal moduliert und bevorzugt an diesem Ort x1 werden Verläufe des modulierten Druck- und Volumenstromsignals aufgenommen.

Zur Verdeutlichung der Erfindung ist in Fig. 2 ein Graph mit zeitlichen Verläufen des modulierten Druck- und Volumenstromsignals gezeigt. In diesem Ausführungsbeispiel wird der Druck p(t) mit einem periodischen Referenzsignal moduliert, und zeigt einen sinusförmigen Verlauf.

Die in die Rohrleitung durch die Modulation gezielt eingebrachte Druckänderung pflanzt sich je nach Fluid mit einer begrenzten Geschwindigkeit (um ca. 1000 m/s) im Rohrleitungsnetz fort und erreicht die Stelle der Leckage entsprechend zeitversetzt. Am Ort der Leckage bewirkt die Druckänderung eine Änderung des Leckage-Volumenstroms. Steigt oder sinkt der Druck in der Rohrleitung, so steigt bzw. sinkt auch der Volumenstrom entsprechend. Diese Änderung kann von einem Durchflussmessgerät erfasst werden. Wird das Durchflussmessgerät ebenfalls an dem Ort x1 platziert, so erfasst es den erhöhten Volumenstrom V(t) wiederum zeitversetzt. In Fig. 2 ist der im Vergleich zum Drucksignal p(t) zeitversetzte sinusförmige Verlauf des Volumenstromsignals V(t) erkennbar. Somit vergeht etwa zweimal die Laufzeit in der Rohrleitungsstrecke, bis am Ort x1 der evozierten Druckerhöhung der entsprechende Anstieg des Volumenstroms messbar ist. Somit kann bei Detektion einer Zeitdifferenz Δt (vgl. Δt in Fig. 2) zwischen definierten Signalanteilen des Drucksignals und des Volumenstromsignals, aus dieser Zeitdifferenz Δt eine Entfernung E1 (vgl. Fig. 1) der Leckage zu diesem Ort x1 ermittelt werden.

Wird dieses Messverfahren im verzweigten Rohrleitungsnetz an mehreren Messorten wiederholt, so kann der Ort der Leckage mittels Korrelation ermittelt werden.

Da die Messsignale vermutlich verrauscht und mit allerlei Störsignalen überlagert sind, ist es des Weiteren sinnvoll, hier eine Methode im Zusammenhang mit Korrelation anzuwenden. Vorgeschlagen wird ein Lock-In Verstärker, der die Signale p(t) (=Referenzsignal) und V(t) (=Messsignal) miteinander multipliziert. Dadurch werden statistische Störsignale eliminiert und die Signalanteile, die mit dem Referenzsignal korrelieren, werden verstärkt. Durch Justage der Phasenverschiebung des Referenzsignals am Lock-In Eingang ist das Ausgangssignal des Lock-In Verstärkers am größten, sobald Referenz- und Messsignal in Phase sind. Die Phasenverschiebung ist ein Maß für die Entfernung der Leckage zum Messort.

Alternativ können auch Verfahren aus der Identifikation dynamischer Systeme genutzt werden, die explizit eine Totzeit schätzen können. Diese Totzeit entspricht genau der Phasenverschiebung oben bzw. der Verzögerung.

## Patentansprüche

1. Verfahren zur Detektion einer Leckage in einem Versorgungsnetzwerk mit einem Rohrleitungssystem, durch welches ein Fluid geleitet wird, wobei an N verschiedenen Orten (x1, x2, ...xN) des Rohrleitungssystems in Abhängigkeit von der Zeit jeweils ein Druck (p(t)) des Fluids und ein Volumenstrom (V(t)) des Fluids im Rohrleitungssystem messtechnisch erfasst werden,
**dadurch gekennzeichnet, dass** an einem ersten Ort (x1) für eine erste definierte Zeitdauer (T1) der Druck im Rohrleitungssystem mit einem ersten vorgebbaren Referenzsignal (M1) moduliert wird, und bevorzugt an diesem ersten Ort (x1) Verläufe des modulierten Druck- und Volumenstromsignals aufgenommen werden und bei Detektion einer Zeitdifferenz (Δt1) zwischen definierten Signalanteilen des Drucksignals und des Volumenstromsignals, aus dieser Zeitdifferenz (Δt1) eine erste Entfernung (E1) einer Leckage zu diesem ersten Ort (x1) ermittelt wird.

2. Verfahren nach Anspruch 1,
**dadurch gekennzeichnet, dass** an einem zweiten Ort (x2) für eine zweite definierte Zeitdauer (T2), welche gleich der ersten Zeitdauer (T1) sein kann, der Druck im Rohrleitungssystem mit einem zweiten vorgebbaren Referenzsignal (M2), welches gleich dem ersten Referenzsignal (M1) sein kann, moduliert wird, und bevorzugt an diesem zweiten Ort (x2) Verläufe des modulierten Druck- und Volumenstromsignals aufgenommen werden und bei Detektion einer Zeitdifferenz (Δt2) zwischen definierten Signalanteilen des Drucksignals und des Volumenstromsignals, aus dieser Zeitdifferenz (Δt2) eine zweite Entfernung (E2) einer Leckage zu diesem zweiten Ort (x2) ermittelt wird und an weiteren Orten (x3, x4, ...) das Verfahren wiederholt wird und aus einer Vielzahl der derart ermittelten Entfernungen (E3, E4, ...) die Position der Leckage in dem Rohrleitungssystem ermittelt wird.

3. Verfahren nach Anspruch 1 oder 2,
**dadurch gekennzeichnet, dass** die Ermittlung der Entfernungen der Leckage zu den Orten (x1, x2, ...xN) zu unterschiedlichen Messzeitpunkten (t1, t2, ...tM) erfolgt.

4. Verfahren nach Anspruch 2 oder 3,
**dadurch gekennzeichnet, dass** zumindest teilweise die Orte, an welchen der Druck im Rohrleitungssystem moduliert wird, unterschiedlich zu den Orten sind, an welchen der Druck und der Volumenstrom des Fluids gemessen werden.

5. Verfahren nach einem der Ansprüche 1 bis 4,
**dadurch gekennzeichnet, dass** die messtechnischen Erfassung des Drucks und des Volumenstroms des Fluids an unterschiedlichen Orten im selben Rohrleitungsabschnitt positioniert sind.

6. Verfahren nach einem der vorhergehenden Ansprüche,
**dadurch gekennzeichnet, dass** zumindest teilweise die Zeitdauern (Ti), während welchen der Druck im Rohrleitungssystem moduliert wird, und die Zeitdauern, während welchen der Druck und der Volumenstrom des Fluids gemessen werden, übereinstimmen.

7. Verfahren nach einem der vorhergehenden Ansprüche,
**dadurch gekennzeichnet, dass** es sich für die Modulation des Drucks um ein periodisches Signal mit vorgebbarer Amplitude, Frequenz und Phase handeln kann und dementsprechend die an einem Ort ermittelten Zeitdifferenzen zwischen Druck -und Volumenstromsignal Phasendifferenzen sind.

8. Verfahren nach Anspruch 7,
**dadurch gekennzeichnet, dass** bei einem periodischen Modulationssignal die Phase zwischen dem Drucksignal und dem Volumenstromsignal dadurch beeinflusst wird, dass die Frequenz des Drucksignals variiert wird.

9. Verfahren nach einem der vorhergehenden Ansprüche,
**dadurch gekennzeichnet, dass** das gemessene Drucksignal mit dem gemessenen Volumenstromsignal korreliert wird.

10. Verfahren nach einem der vorhergehenden Ansprüche,
**dadurch gekennzeichnet, dass** zur Verbesserung des Signal-Rauschverhältnisses die Zeitdauern, während welchen der Druck und der Volumenstrom des Fluids gemessen werden, möglichst groß gewählt werden.

11. Verfahren nach einem der vorhergehenden Ansprüche,
**dadurch gekennzeichnet, dass** die Amplitude und Frequenz des Modulationssignals in Abhängigkeit von Eigenschaften des Rohrleitungssystems ausgewählt werden.

12. Verfahren nach einem der vorhergehenden Ansprüche,
**dadurch gekennzeichnet, dass** die messtechnische Erfassung des Drucks und des Volumenstroms des Fluids und/oder die Druckmodulation gesteuert werden.

13. Verfahren nach einem der Ansprüche 1 bis 12,
**dadurch gekennzeichnet, dass** es sich bei dem Versorgungsnetzwerk um ein Wasserverteilnetz handelt und bei den Orten um Einspeisestellen für Wasser in das Rohrleitungssystem handelt.

14. Verfahren nach einem der Ansprüche 1 bis 12,
**dadurch gekennzeichnet, dass** es sich bei dem Versorgungsnetzwerk um ein Wasserstoffverteilnetz handelt und bei den Orten um Einspeisestellen für Wasserstoff in das Rohrleitungssystem handelt.

15. Vorrichtung (1) zur Detektion einer Leckage in einem Versorgungsnetzwerk mit einem Rohrleitungssystem, durch welches ein Fluid geleitet wird, umfassend
- eine Vorrichtung zur Modulation (2), welche dazu ausgebildet ist, den Druck des Fluids mit einem vorgebbaren Referenzsignal zu modulieren,
- eine computergestützte Steuereinheit (3) zur Steuerung der Vorrichtung zur Modulation (2),
- ein Erfassungssystem (4), welches an einem Ort (x1) mit dem Rohrleitungssystem koppelbar ist und einen Drucksensor (4A) zur messtechnischen Erfassung eines Drucks des Fluids und einen Durchflusssensor (4B) zur messtechnischen Erfassung des Volumenstroms des Fluids aufweist,
- eine Verarbeitungseinheit (5), welche zumindest mit der Steuereinheit (3) der Vorrichtung zur Modulation (2) und dem Erfassungssystem (4) kommunikativ verbunden ist und dazu ausgebildet ist, eine Entfernung (E1) zu einer Leckage zu ermitteln, **dadurch gekennzeichnet,**
**dass** die mittels des Erfassungssystems (4) aufgenommenen Verläufe des modulierten Druck- und Volumenstromsignals verglichen werden und bei Detektion einer Zeitdifferenz (Δt1) zwischen definierten Signalanteilen des Drucksignals und des Volumenstromsignals, aus dieser Zeitdifferenz (Δt1) eine Entfernung einer Leckage zu diesem Ort (x1) abgeleitet wird.

16. Computergestützte Verarbeitungseinheit (6), welche mit mindestens einer Vorrichtung (1) gemäß Anspruch 15 verbunden ist und dazu ausgebildet ist, das Verfahren nach einem der Ansprüche 1 bis 14 durchzuführen.
